# EUROPEAN PATENT APPLICATION

(11) **EP 4 170 761 A1**
(43) Date of publication of application: **26.04.2023**
(21) Application number: 22203507.3
(22) Date of filing: 25.10.2022
(51) Int. Cl.: H01M 8/0234, H01M 8/0239, H01M 8/0243, H01M 8/18, H01M 8/1011

(54) **VAPOR-FED RECHARGEABLE DIRECT LIQUID HYDROGEN CARRIER FUEL CELL**

(30) Priority: 25.10.2021 US 202117509676
(71) Applicant: Hamilton Sundstrand Corporation, Charlotte, NC 28217-4578 (US)
(72) Inventor: SARAIDARIDIS, James D., Hartford, 06106 (US); DARLING, Robert Mason, South Windsor, 06074 (US)
(74) Representative: Dehns

(57) **Abstract**

The present invention is directed to a rechargeable electrochemical device including a first electrode assembly (120) and a second electrode assembly spaced-apart from the first electrode assembly (120), a membrane (130) arranged between the first electrode assembly (120) and the second electrode assembly, a first transport plate (150) arranged on the first electrode assembly (120) and a second transport plate arranged on the second electrode assembly, an electrolyte disposed in the first electrode assembly (120) and the second electrode assembly, and a vapor-phase hydrogen carrier in the first transport plate (150) arranged on the first electrode assembly (120) or in the second transport plate arranged on the second electrode assembly; a method for using a rechargeable electrochemical device; and a method for making a rechargeable electrochemical device.

## Description

### BACKGROUND

Described herein are rechargeable-liquid fuel cells (RLFCs) with vapor-phase hydrogen carriers.

Fuel cells are commonly used to produce electrical energy from reducing and oxidizing reactant fluids to power electrical apparatuses, such as apparatuses on-board space vehicles or on-site building generators.

Typically, fuel cells generate energy through a chemical process that converts a hydrogen fuel and oxygen into water, producing electricity and heat in the process. Batteries become depleted and have duration limitations, but fuel cells operate with constantly renewed reactants. While batteries are recharged using electricity, fuels cells are recharged using hydrogen and oxygen. A fuel cell stack uses the hydrogen supplied by the fuel source to produce electricity. Several types of hydrogen storage are used, for example, compressed gases, liquid hydrogen, metal hydrides (thermal release), and chemical hydrides (hydrolysis). Alcohols constitute a class of liquid organic hydrogen carriers (LOHCs). Their hydrogen content is lower, but they can be electrochemically dehydrogenated to aldehydes or ketones at much lower temperatures (80-90 °C).

### SUMMARY

Disclosed is a rechargeable electrochemical device including: a first electrode assembly and a second electrode assembly spaced-apart from the first electrode assembly; a membrane arranged between the first electrode assembly and the second electrode assembly; a first transport plate arranged on the first electrode assembly and a second transport plate arranged on the second electrode assembly; an electrolyte disposed in the first electrode assembly and the second electrode assembly; and a vapor-phase hydrogen carrier in the first transport plate arranged on the first electrode assembly or in the second transport plate arranged on the second electrode assembly.

In some aspects, the first electrode assembly includes a first gas diffusion layer and a first catalyst layer, and the second electrode assembly includes a second gas diffusion layer and a second catalyst layer.

In any one or combination of the foregoing aspects, the first electrode assembly and the second electrode assembly are porous electrode assemblies.

In any one or combination of the foregoing aspects, the device is a rechargeable-liquid fuel cell.

In any one or combination of the foregoing aspects, the membrane is an ion-exchange membrane.

In any one or combination of the foregoing aspects, the electrolyte is a solid-state electrolyte.

In any one or combination of the foregoing aspects, the hydrogen carrier is in a vapor phase on a second side of the transport plate and in a liquid phase on a first side of the transport plate.

In any one or combination of the foregoing aspects, the first transport plate and the second transport plates are microporous transport plates.

In any one or combination of the foregoing aspects, the vapor-phase hydrogen carrier is isopropanol.

In any one or combination of the foregoing aspects, the vapor-phase hydrogen carrier is provided through the first transport plate arranged on the first electrode assembly.

In any one or combination of the foregoing aspects, the first transport plate and the second transport plate each includes a hydrophilic agent.

In any one or combination of the foregoing aspects, the second electrode assembly includes a metal-electrocatalyst and is configured for redox reactions with each of a gaseous reductant and a gaseous oxidant, and the first electrode assembly includes an electrocatalyst and is configured for redox reactions with a liquid or vapor hydrogen carrier solution.

In any one or combination of the foregoing aspects, the electrocatalyst of the first electrode assembly and the metal-electrocatalyst of the second electrode assembly include at least one metal catalyst on a support.

In any one or combination of the foregoing aspects, the electrocatalyst of the first electrode assembly and the metal-electrocatalyst of the second electrode assembly is selected from the group of platinum-group metals, transition metals, and combinations thereof.

In any one or combination of the foregoing aspects, the electrocatalyst of the first electrode assembly and the metal-electrocatalyst of the second electrode assembly includes about 10% to about 50% by weight of the at least one metal catalyst on a support.

In any one or combination of the foregoing aspects, further including an external supply and storage system including a vessel fluidly connected in a recirculation loop with the first electrode assembly.

In any one or combination of the foregoing aspects, wherein an operational pressure of the electrochemical device is about 80 kilopascal to about 200 kilopascal.

In any one or combination of the foregoing aspects, wherein a power density during a discharge with air is about 0.1 watt per square centimeters to about 1 watt per square centimeters at about 0.6 volt with about 2 molar isopropanol.

In any one or combination of the foregoing aspects, wherein each of the first transport plate and the second transport plate each includes: an electrically conductive graphite powder; a thermoset binder; and a hydrophilic agent

In any one or combination of the foregoing aspects, wherein the electrically conductive graphite powder is in an amount of between about 60% to about 90% by weight of the body.

In any one or combination of the foregoing aspects, wherein the thermoset binder is in an amount of between about 6% to about 18% by weight of the body.

In any one or combination of the foregoing aspects, wherein the hydrophilic agent is in an amount of between about 2% to about 20% by weight of the body.

In any one or combination of the foregoing aspects, wherein the hydrophilic agent includes a hydrophilically-modified electrically conductive carbon black, tin hydroxide, or a combination thereof; wherein the modified carbon black is carbon having attached at least one organic group, the organic group including i.) at least one aromatic group or a C₁-C₁₂ alkyl group, and ii.) at least one ionic group, one ionizable group, or a mixture of an ionic group and an ionizable group wherein the ionic or the ionizable group is a sulfonic acid or a salt thereof, wherein the at least one aromatic group or C₁-C₁₂ alkyl of the organic group is directly attached to the carbon, and the organic group is present at a level of from about 0.10 to about 4.0 micromoles/m² of the carbon used based on the nitrogen surface area of the carbon.

In any one or combination of the foregoing aspects, wherein each of the first and second transport plates has a mean pore size of less than 3.1 microns, and an open porosity of greater than 25% of the plate.

In any one or combination of the foregoing aspects, wherein each of the first and second transport plates has a bubble pressure of greater than 4 pounds per square inch.

In any one or combination of the foregoing aspects, wherein pores of each of the first and second transport plates are sufficiently hydrophilic to wick fill to greater than 70% of a vacuum filled level.

In any one or combination of the foregoing aspects, wherein each of the first and second transport plates includes a thermoset binder that comprises a phenolic resin, a vinyl ester resin, an epoxy resin, a diallylphthalate resin, a urethane resin, or a combination thereof.

Also disclosed is a method for using a rechargeable electrochemical device, the method comprising: charging an electrochemical device by: feeding a vapor-phase dehydrogenated carrier into a first half-cell of the electrochemical device; and feeding a gaseous reductant into a second half-cell of the electrochemical device to electrochemically reduce at least a portion of the vapor-phase dehydrogenated carrier in the electrochemical device, the first half-cell including a first electrode assembly configured for redox reactions with the vapor-phase dehydrogenated carrier, and the second half-cell having a second electrode assembly configured for redox reactions with the gaseous reductant, wherein the first electrode assembly includes an electrocatalyst and the second electrode assembly includes a metal-electrocatalyst; and discharging the electrochemical device to provide electrical power output by: feeding the vapor-phase hydrogen carrier into a first half-cell of the electrochemical device; and feeding a gaseous oxidant into a second half-cell of the electrochemical device to electrochemically oxidize at least a portion of the vapor-phase hydrogen carrier in the electrochemical device

In some aspects of the method, the vapor-phase hydrogen carrier and the vapor-phase dehydrogenated carrier is provided through a first transport plate into the first half-cell of the electrochemical device.

In any one or combination of the foregoing aspects of the method, the vapor-phase dehydrogenated carrier is acetone, the vapor-phase hydrogen carrier is isopropanol, the gaseous reductant is hydrogen, and the gaseous oxidant is air.

Also disclosed is a method for making a rechargeable electrochemical device, the method comprising: arranging a membrane between a first electrode assembly and a second electrode assembly; arranging a first transport plate on the first electrode assembly, and a second transport plate on the second electrode assembly; and disposing a vapor-phase hydrogen carrier and a vapor-phase dehydrogenated carrier in the first transport plate arranged on the first electrode assembly or in the second transport plate arranged on the second electrode assembly.

In some aspects of the method, the vapor-phase hydrogen carrier and the vapor-phase dehydrogenated carrier is disposed in the first transport plate arranged on the first electrode assembly.

In any one or combination of the foregoing aspects of the method, the vapor-phase hydrogen carrier is isopropanol.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE DRAWINGS

The following descriptions should not be considered limiting in any way. With reference to the accompanying drawings, like elements are numbered alike:
FIG. 1 is a rechargeable-liquid fuel cells (RLFCs) configuration during discharge;
FIG. 2 is a rechargeable-liquid fuel cells configuration during charging;
FIG. 3 shows a flow diagram of a method for using a rechargeable electrochemical device;
FIG. 4 is a graph of theoretical molar free energy of reaction divided by the Faraday constant (volts (V)) versus molar concentration in (M, or mole/L) showing an energy density for various liquid hydrogen carriers; and
FIG. 5 is a schematic of a cell used for both charging and discharging of aqueous solutions of isopropanol (IPA) and acetone.

### DETAILED DESCRIPTION

Hydrogen used in fuel cells as a fuel may be produced from a fossil fuel such as natural gas, methanol etc. through a reforming process. The hydrogen produced by the reforming process is not pure, lowering the efficiency of the fuel cell. Adding a reformer to convert hydrocarbon fuel into hydrogen drops the overall efficiency of the fuel cell to about 30 to 40 percent. Liquid organic hydrogen carriers (LOHCs) are alternatives to distributing and storing compressed gaseous hydrogen or cryogenic liquid hydrogen; however, the vast majority of the work on LOHC conversions has been done using thermal processes that operate at high temperatures and pressure.

Electrochemical conversion of LOHCs in RLFCs is another option, but can swell common ion-exchange membrane, causing increased crossover of fuel from one electrode to other electrode, as well as poisoning of electrode catalysts which lowers efficiency.

Accordingly, described herein are rechargeable electrochemical devices and methods of making and using thereof that use feed hydrogen carriers in the vapor phase which can limit membrane swelling, reduce or eliminate fuel crossover and therefore maintain higher efficiency performance. Liquid hydrogen carriers have high enough vapor pressure that they can passively evaporate from the surface of a porous bipolar transport plate (also referred as a transport plate). Liquid hydrogen carriers are stored in reservoirs to maintain high energy density and are converted to vapor-phase before feeding to a RLFC either through dedicated flow channels or transport plates, this operation is performed passively inside the RLFC. The extent of evaporation is determined by a vapor/liquid equilibrium. The vapor-phase hydrogen carriers swell membranes less than when in the liquid phase, which prevents crossover and poisoning of the opposing electrode assembly catalyst, thereby preventing performance decay.

Disclosed herein is a rechargeable electrochemical device including a first electrode assembly and a second electrode assembly spaced-apart from the first electrode assembly; a first transport plate arranged over the first electrode assembly and a second transport plate arranged over the second electrode assembly; and a vapor-phase hydrogen carrier in the first transport plate arranged over the first electrode assembly or in the second transport plate arranged over the second electrode assembly. The first electrode assembly includes a first gas diffusion layer and a first catalyst layer, similarly, the second electrode assembly includes a second gas diffusion layer and a second catalyst layer.

A detailed description of one or more embodiments of the disclosed apparatus and method are presented herein by way of exemplification and not limitation with reference to the Figures. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items.

It will be understood that when an element is referred to as being "on" another element, it can be directly in contact with the other element or intervening elements may be present therebetween. In contrast, when an element is referred to as being "directly on" another element, there are no intervening elements present. Expressions such as "at least one", "at least one kind", "one or more kinds", or "one or more" when preceding a list of elements, modify the entire list of elements and do not modify the individual elements of the list. As used herein, the term "combination thereof" is used to refer to a mixture or alloy of two or more components described above.

As used herein, the term "first", "second", or the like do not indicate order, quantity, or importance, and are used to distinguish one element from another. It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. As used herein, the term "including" is used to indicate that other components may be added or/and interposed, rather than excluding other components, unless specifically stated to the contrary. It will be further understood that the terms "comprises" and/or "comprising," or "includes" and/or "including" when used in this specification, specify the presence of stated features, integers, steps, operations, elements, and/or components, but do not preclude the presence or addition of one or more other features, integers, steps, operations, element components, and/or groups thereof.

Throughout the present specification, "an embodiment", "example embodiment", "exemplary embodiment", etc. are included in at least one embodiment in which specific elements described in connection with the embodiment are included in this specification, which means that these elements may or may not exist in another embodiment. Further, it should be understood that the described elements may be combined in any suitable manner in various embodiments.

Unless otherwise defined, all terms including technical and scientific terms used herein have the same meaning as commonly understood by one of ordinary skill in the art to which this disclosure belongs. All cited patents, patent applications and other references are incorporated herein by reference in their entirety. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. However, if the terms in this specification contradict or conflict with the terms of the incorporated references, the terms from this specification take precedence over the conflicting terms in the incorporated reference.

While specific embodiments and implementations have been described, alternatives, modifications, variations, improvements and substantive equivalents that are currently unexpected or unforeseeable may occur to applicants or those skilled in the art. Accordingly, the appended claims and amendments are intended to include all such alternatives, modifications, improvements and substantial equivalents.

### Rechargeable-liquid Fuel Cell (RLFC)

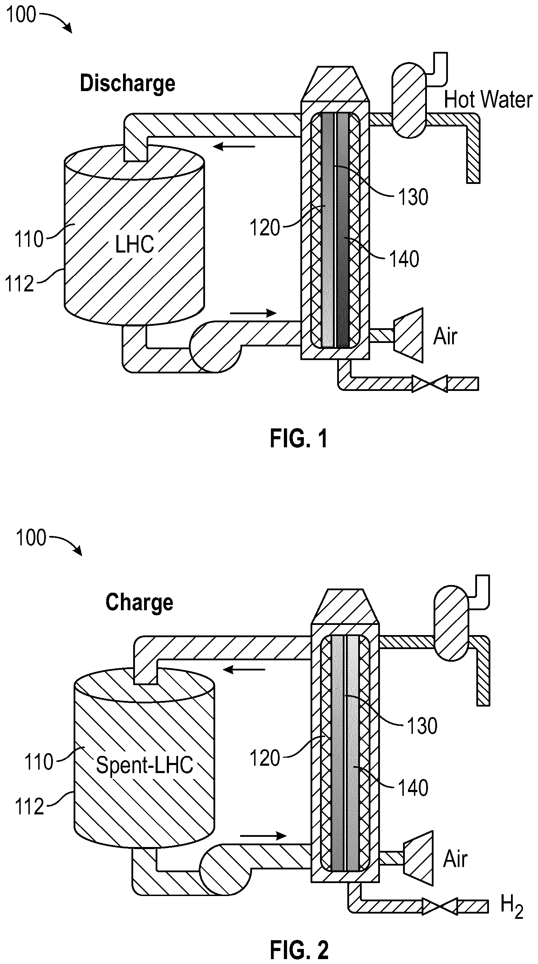

A configuration of a RLFC device 100 during discharge is shown in FIG. 1, in which a liquid hydrogen carrier (LHC) 110 is stored in a tank 112 and oxidized on a first electrode assembly or a LHC electrode assembly 120. 112 is also called as a LHC supply or storage system. The direct use of a rechargeable LHC 110 in fuel cell mode is generically described as the LHC undergoing oxidation on the first electrode assembly 120: 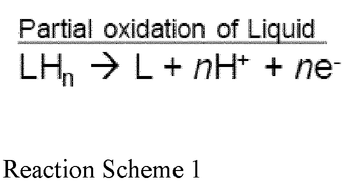 The oxygen-reduction reaction (ORR) consumes the protons generated on a second electrode or a H₂/O₂ electrode assembly 140. A separator or a membrane 130 is arranged between the first electrode assembly 120 and the second electrode assembly 140. The separator 130 is any suitable ion-exchange membrane. 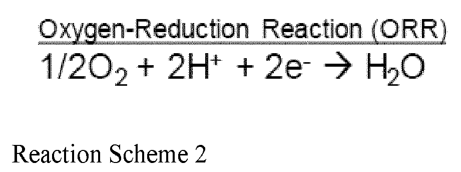 When isopropanol is used as a liquid hydrogen carrier, the following reaction occurs.

(CH₃)₂CHOH → (CH₃)₂CO + 2H⁺ + 2e⁻ Reaction Scheme 3

A configuration of a RLFC device 100 during charging (storage of H₂ energy) is shown in FIG. 2, in which the H₂/O₂ electrode or second electrode assembly 140 is fed H₂ (either a pure or dilute stream) where the H₂-oxidation reaction (HOR) occurs, while the LHC 110 is recharged via reduction on the LHC electrode or first electrode assembly 120 and is stored in a tank 112. The separator or membrane 130 is arranged between the first electrode assembly 120 and the second electrode assembly 140. The following reactions occur during charging.

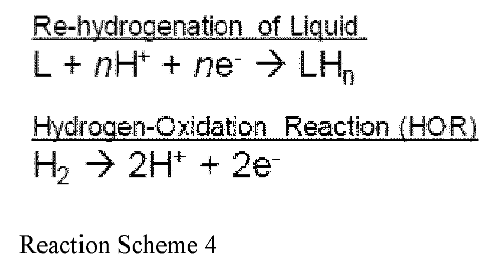

The hydrogen can come from a wide variety of sources. If the H₂ is generated from a hydrocarbon (e.g., reformation of natural gas), it does not have to be fully purified or compressed.

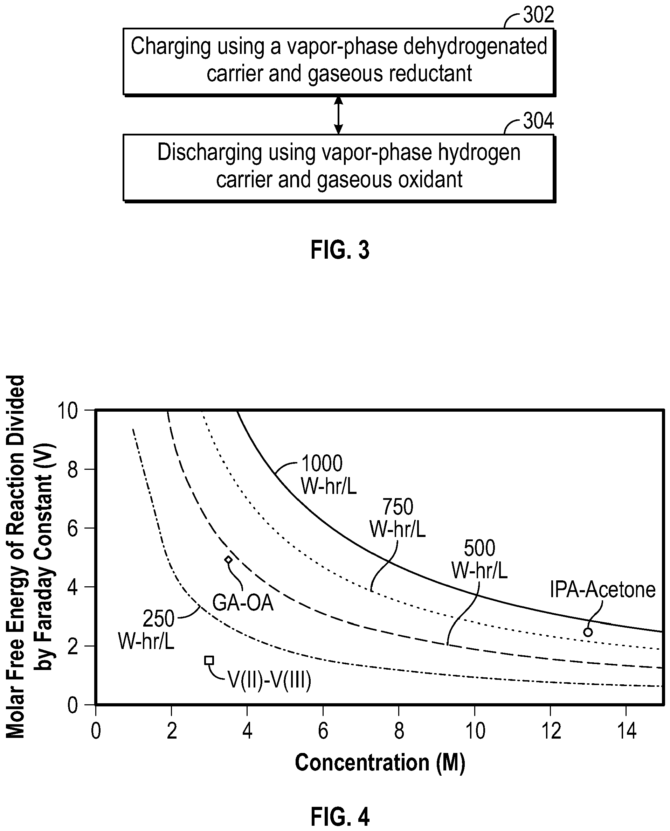

As shown in FIG. 3, a method for using a rechargeable electrochemical device includes, as shown in box 302, charging the device using a vapor-phase dehydrogenated carrier and a gaseous reductant. In one or more embodiments, the device 100 is charged by feeding a vapor-phase dehydrogenated carrier into a first half-cell (first electrode assembly 120) of the device 100 and feeding a gaseous reductant into a second half-cell (second electrode assembly 140) to electrochemically reduce at least a portion of the vapor-phase dehydrogenated carrier. For example, the device 100 is charged by providing the gaseous reductant to the second electrode assembly 140 while circulating the vapor-phase dehydrogenated carrier through the first electrode assembly 120. In some embodiments, the vapor-phase dehydrogenated carrier is a ketone. In some other embodiments, the ketone is acetone, and the gaseous reductant is hydrogen.

The method further includes, as shown in box 304, discharging using the vapor-phase hydrogen carrier and gaseous oxidant. The device 100 is discharged by feeding a vapor-phase hydrogen carrier into the first half-cell (first electrode assembly 120) of the device 100 and feeding a gaseous oxidant into the second half-cell (second electrode assembly 140) to electrochemically oxidize at least a portion of the vapor-phase hydrogen carrier. For example, the device 100 is discharged by providing the gaseous oxidant to the second electrode assembly 140 while circulating the vapor-phase hydrogen carrier through the first electrode assembly 120. In some embodiments, the vapor-phase hydrogen carrier is an alcohol such as isopropanol, and the gaseous oxidant is air.

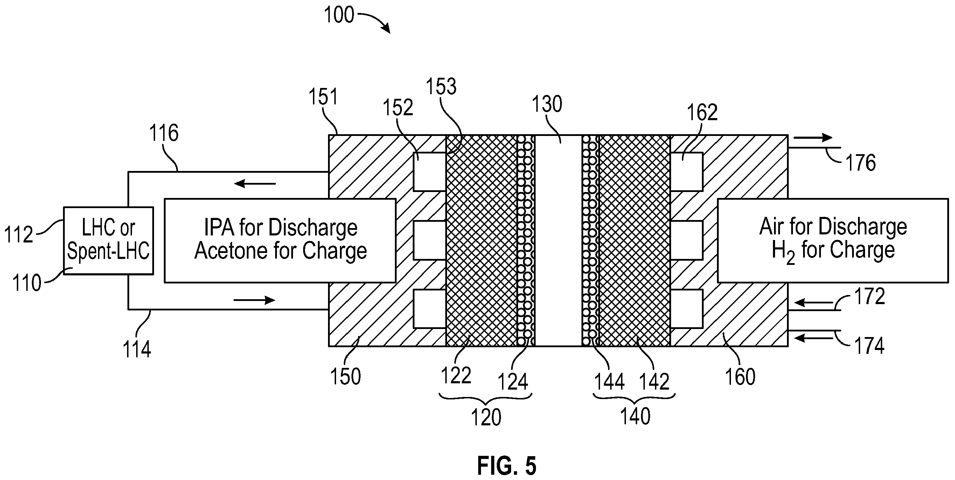

FIG. 5 shows a schematic of a rechargeable electrochemical device (also referred as a vapor-phase hydrogen carrier cell) 100 used for both charging and discharging of aqueous solutions of a hydrogen carrier (e.g., isopropanol (IPA)) and a dehydrogenated carrier (e.g., acetone) according to embodiments. A first porous hydrophilic transport plate (a first transport plate) 150 including a plurality of channels 152 is arranged on a first electrode assembly 120, and a second microporous hydrophilic transport plate (a second transport plate) 160 with a plurality of channels 162 is arranged on a second electrode assembly 140. In some embodiments, the first transport plate 150 and the second transport plate 160 both are microporous hydrophilic transport plates. In some embodiments the first electrode assembly 120 includes a first gas diffusion layer 122 and a first catalyst layer 124, similarly, the second electrode assembly 140 includes a second gas diffusion layer 142 and a second catalyst layer 144. In one or more embodiments, the first electrode assembly 120 is a LHC electrode assembly, and the second electrode assembly 140 is a H₂/O₂ electrode assembly. In some embodiments, the first transport plate 150 including a plurality of channels 152 is arranged on the first gas diffusion layer 122 of the first electrode assembly 120, and the second transport plate 160 with a plurality of channels 162 is arranged on the second gas diffusion layer 142 of the second electrode assembly 140.

A liquid hydrogen carrier (LHC), such as an alcohol (e.g., IPA), is fed for discharge, and a dehydrogenated carrier (Spent-LHC), such as acetone, is fed for charge from the tank or reservoir 110 through supply lines 114 and 116, and the plurality of channels 152 or the first transport plate 150. The plurality of channels 152 next to the first gas diffusion layer 122 contain a vapor. The micropores (not shown) in the first transport plate 150 are filled with liquid. Gaseous reactants such as oxidant and reductant, are directly fed to the plurality of channels 162 of the second transport plate 160 from their respective tanks or sources (not shown), for example, a gaseous oxidant, such as air, is fed for discharge through an inlet 172, and a gaseous reductant, such as hydrogen (H₂), is fed for charge through an inlet 174, the byproduct such as hot water is discharged through an outlet 176. In some embodiments, the inlets 172 and 174 can be a same inlet but plumbed differently to provide air or hydrogen as required. The first or LHC electrode assembly 120 includes the first gas diffusion layer 122 (a LHC or first electrode assembly gas diffusion layer) and the first catalyst layer (or a first electrode assembly catalyst layer) 124. Similarly, the H₂/O₂ electrode or second electrode assembly 140 includes the second gas diffusion layer 142 (a H₂/O₂ or second electrode assembly gas diffusion layer), and the second catalyst layer 144 (or a second electrode assembly catalyst layer). The LHC diffusion layer 122 (the first gas diffusion layer) and the H₂/O₂ diffusion layer 142 (the second gas diffusion layer) are collectively called gas diffusion layers (GDLs) 122, 142. A membrane or a separator 130 separates the first electrode assembly 120 and second electrode assembly 140 components of the rechargeable-liquid fuel cell 100. The membrane or separator 130 is any suitable ionically conductive and electrically insulating membrane.

In one or more embodiments, the rechargeable electrochemical device 100 includes a first electrode assembly 120 and a second electrode assembly 140 spaced-apart from the first electrode assembly, a first transport plate 150 arranged over the first electrode assembly 120 and a second transport plate 160 arranged over the second electrode assembly 140; and a vapor-phase hydrogen carrier in the first transport plate 150 arranged over the first electrode assembly 120 or in the second transport plate 160 arranged over the second electrode assembly 140. In some embodiments, the first transport plate 150 arranged over the first electrode assembly 120 is a porous hydrophilic transport plate, and the second transport plate 160 arranged over the second electrode assembly 140 is a porous hydrophilic transport plate. In some embodiments, the first transport plate 150 and the second transport plate 160 are microporous transport plates. In some embodiments, the first transport plate 150, or a porous plate 150, is filled with liquid hydrogen carrier (LHC), LHC evaporates off the surface of the first plate 150 into channels 152. In other embodiments, the device 100 is a rechargeable-liquid fuel cell also called as a vapor-fed rechargeable direct liquid hydrogen carrier fuel cell or a vapor-phase hydrogen carrier cell. In some other embodiments, the vapor-phase hydrogen carrier is isopropanol. In some other embodiments, the vapor-phase hydrogen carrier is provided through the first transport plate 150 arranged over the first electrode assembly 120. In some embodiments, the first transport plate 150 and the second transport plate 160 are porous hydrophilic transport plates. In some embodiments, the first electrode assembly 120, and the second electrode assembly 140 are porous electrode assemblies.

### Hydrogen Carriers (HC)

FIG. 4 shows theoretical molar free energy of reaction divided by the Faraday constant for various combinations of hydrogen carriers that can be used in the RLFCs. Among the listed combinations in FIG. 4, Vanadium (II)-Vanadium (III) (V(II)-V(III)), and glycolic acid & oxalic acid (GA-OA) dissolve room-temperature solid hydrogen carrier species in water, and therefore these combinations are not suitable to be used as a vapor-phase hydrogen carriers as they leave a solid residue when the liquid solvent is evaporated. However, the isopropanol (IPA)-acetone couple is suitable as a vapor-phase hydrogen carrier, as they do not leave any residue behind when converted to the vapor-phase and they have suitable vapor pressure. In some embodiments, the carrier is in a vapor phase on one side of the plate and in liquid phase on second side of the plate, while not wishing to be bound by theory, it is understood that this is due to porous transport plates with passive evaporation.

### Transport Plates

In some embodiments, the first transport plate 150 and the second transport plate 160 are porous transport plates. In some other embodiments, the first transport plate 150 is a porous transport plate, and the second transport plate 160 is a microporous transport plate. In some embodiments, the first transport plate 150 and the second transport plate 160 both are microporous transport plates. In one or more embodiments, the first transport plate 150 and the second transport plate 160 include a hydrophilic agent. In some embodiments, the first transport plate 150 and the second transport plate 160 include an electrically conductive hydrophilic agent, for example, an electrically conductive oxidized or hydrophilically-modified graphite powder. In some embodiments, the first transport plate 150 is a porous hydrophilic transport plate, and the second transport plate 160 is a microporous hydrophilic transport plate. In other embodiments, the first transport plate 150 and the second transport plate 160 include a carbon fiber; a thermoset; and a hydrophilic agent. In some other embodiments, the hydrophilic agent is in an amount of between about 2% to about 20% by weight of the body. In some embodiments, the hydrophilic agent includes a hydrophilically-modified carbon black, tin hydroxide, or a combination thereof. In some other embodiments, the hydrophilic agent is the modified carbon black. In some embodiments, the hydrophilic agent is not electrically conductive, for example, tin hydroxide or tin oxide. The first transport plate 150 and the second transport plate 160 are collectively called as the transport plate or the transport plates. In some embodiments, the modified carbon black being carbon having attached at least one organic group, the organic group includes at least one aromatic group or a C₁-C₁₂ alkyl group, and the organic group also including at least one ionic group, one ionizable group, or a mixture of an ionic group and an ionizable group wherein the ionic or the ionizable group is a sulfonic acid or a salt thereof. The at least one aromatic group or C₁-C₁₂ alkyl of the organic group is directly attached to the carbon, and the organic group is present at a level of from about 0.10 to about 4.0 micromoles per square meters (micromoles/m²) of the carbon used based on the nitrogen surface area of the carbon. In some embodiments, the transport plate has a mean pore size of less than 3.1 microns, and an open porosity of greater than 25% of the body. By the phrase "mean pore size", it is meant that the measurement of "less than 3.1 microns" is measuring mean widest diameters across the pores. By the phrase "open porosity", it is meant that the pores are open to flow of fluids through a plane defined by a longest axis of the body within the pores, as opposed to sealed pores that cannot permit through flow. For example, the transport plate has a mean pore size of about 0.1 microns to about 3 microns, about 0.2 microns to about 3 microns, about 0.3 microns to about 3 microns, about 0.4 microns to about 3 microns, about 0.5 microns to about 3 microns, about 0.7 microns to about 3 microns, about 1 microns to about 3 microns, about 1.2 microns to about 3 microns, about 1.5 microns to about 3 microns, about 1.8 microns to about 3 microns, about 2 microns to about 3 microns, about 2.2 microns to about 3 microns, about 2.5 microns to about 3 microns, and about 2.7 microns to about 3 microns; and the open porosity of about 25% to about 90%, about 25% to about 80%, about 25% to about 70%, about 25% to about 60%, about 25% to about 50%, about 25% to about 40%, and about 25% to about 30% of the body.

The term "C₁-C₁₂ alkyl group," as used herein, refers to a linear or branched aliphatic hydrocarbon monovalent group having 1 to 12 carbon atoms, and non-limiting examples thereof include a methyl group, an ethyl group, a propyl group, an isobutyl group, a sec-butyl group, a tert-butyl group, a pentyl group, an iso-amyl group, and a hexyl group.

In one or more embodiments, the transport plates include the electrically conductive graphite powder in an amount of between about 60% to about 80% by weight of the plate, for example, about 60% to about 75%, about 60% to about 70% and about 60% to about 65% by weight of the plate. In some embodiments, the transport plates include the electrically conductive graphite powder in an amount of between about 60% to about 90% by weight of the body, for example, about 60% to about 87%, about 60% to about 85%, about 67% to about 87%, about 67% to about 85%, about 67% to about 83%, about 67% to about 80%, about 67% to about 77%, about 67% to about 75%, about 67% to about 73%, and about 67% to about 70% by weight of the plate. In some other embodiments, the transport plate includes the carbon fiber in an amount of between about 5% to about 15% by weight of the plate, for example, about 5% to about 13%, about 5% to about 11%, about 5% to about 9%, and about 5% to about 7% by weight of the plate. Yet, in some other embodiments, the transport plate includes the thermoset binder in an amount of between about 6% to about 18% by weight of the plate, for example, about 6% to about 15%, about 6% to about 13%, about 6% to about 10%, and about 6% to about 8% by weight of the plate. Yet, in some other embodiments, the transport plate includes the hydrophilic agent in an amount of between about 2% to about 20% by weight of the plate, for example, about 2% to about 18%, about 2% to about 15%, about 2% to about 13%, about 2% to about 10%, about 2% to about 8%, and about 2% to about 5% by weight of the plate.

The plurality of channels 152, 162 of the first and second transport plates 150, 160 respectively are of the following dimensions: a depth of the plurality of channels is from about 0.2 millimeters to about 2 millimeters, for example, about 0.2 millimeters to about 1.8 millimeters, about 0.2 millimeters to about 1.5 millimeters, about 0.2 millimeters to about 1.3 millimeters, about 0.2 millimeters to about 1 millimeters, about 0.2 millimeters to about 0.8 millimeters, and about 0.2 millimeters to about 0.5 millimeters; a width of the plurality of channels is from about 0.2 millimeters to about 2 millimeters, for example, about 0.2 millimeters to about 1.8 millimeters, about 0.2 millimeters to about 1.5 millimeters, about 0.2 millimeters to about 1.3 millimeters, about 0.2 millimeters to about 1 millimeters, about 0.2 millimeters to about 0.8 millimeters, and about 0.2 millimeters to about 0.5 millimeters; a spacing of the plurality of channels is from about 0.2 millimeters to about 2 millimeters, for example, about 0.2 millimeters to about 1.8 millimeters, about 0.2 millimeters to about 1.5 millimeters, about 0.2 millimeters to about 1.3 millimeters, about 0.2 millimeters to about 1 millimeters, about 0.2 millimeters to about 0.8 millimeters, and about 0.2 millimeters to about 0.5 millimeters. The plurality of channels help to transport corresponding liquids and gases to corresponding electrodes.

Referring again to FIG. 5, the device 100 further includes a gaseous reactant supply inlets 172 and 174 that provide gaseous reactants such as air and hydrogen respectively to the second electrode assembly 140 through the plurality of channels 162 of the second transport plate 160. The byproduct such as water is removed through the outlet 176 or the transport plate 160. The first transport plate 150, and the second transport plate 160 provide a fuel or remove a spent fuel to/from the first electrode and second electrode assembly 120 and 140 via lines 114, 116, 172, 174, and 176. For example, air is delivered due to pressure gradient from either compressed storage or pump through an inlet 172. IPA or acetone fed from the tank 112 via the supply line 114 through the first transport plate 150, which are evaporated into a vapor-phase that passes through the plurality of channels 152 of the first transport plate 150. Similarly, gaseous reactants, such as air and hydrogen, are fed from the inlets 172 and 174 respectively through the plurality of channels 162 of the second transport plate 160.

In one or more embodiments, the first and second transport plates 150, 160 have a mean pore size of less than 3.1 microns, and an open porosity of greater than 25% of the body. For example, the first and second transport plates have the mean pore size of about 0.1 microns to about 3 microns, about 0.2 microns to about 3 microns, about 0.3 microns to about 3 microns, about 0.4 microns to about 3 microns, about 0.5 microns to about 3 microns, about 0.7 microns to about 3 microns, about 1 microns to about 3 microns, about 1.2 microns to about 3 microns, about 1.5 microns to about 3 microns, about 1.8 microns to about 3 microns, about 2 microns to about 3 microns, about 2.2 microns to about 3 microns, about 2.5 microns to about 3 microns, and about 2.7 microns to about 3 microns. For example, the first and second transport plates have open porosity of about 25% to about 90%, about 25% to about 80%, about 25% to about 70%, about 25% to about 60%, about 25% to about 50%, about 25% to about 40%, and about 25% to about 30% of the body. In some embodiments, the transport plates have a bubble pressure of greater than 4 pounds per square inch, for example, about 4.1 pounds per square inch to about 100 pounds per square inch, about 5 pounds per square inch to about 100 pounds per square inch, about 5 pounds per square inch to about 100 pounds per square inch, about 5 pounds per square inch to about 90 pounds per square inch, about 5 pounds per square inch to about 80 pounds per square inch, about 5 pounds per square inch to about 70 pounds per square inch, about 5 pounds per square inch to about 60 pounds per square inch, about 5 pounds per square inch to about 50 pounds per square inch, about 5 pounds per square inch to about 40 pounds per square inch, about 5 pounds per square inch to about 30 pounds per square inch, about 5 pounds per square inch to about 20 pounds per square inch, and about 5 pounds per square inch to about 10 pounds per square inch. In some other embodiments, pores of the transport plates are sufficiently hydrophilic to wick fill to greater than 70% of a vacuum filled level, for example, about 70% to about 100%, about 70% to about 95%, about 70% to about 90%, about 70% to about 85%, about 70% to about 80%, and about 70% to about 75% of the vacuum filled level. Yet in some other embodiments, the first and second transport plates include a thermoset binder selected from the group consisting of a phenolic resin, a vinyl ester resin, an epoxy resin, a diallylphthalate resin, and a urethane resin.

Any suitable material that provides a hydrophilic microporous bulk structure, and also can be treated at certain surface in order to be non-porous/permeable to the liquid fuel, its products, or water can be used to construct the transport plates 150, 160. Non limiting examples of such materials are, a metal, an alloy, a carbon material, or a combination thereof. The transport plates 150, 160 include a solid plate, a porous plate, a microporous plate (also known as water-transport plate), or a combination thereof. The porous or microporous plates act as a wet seal that prevent a gas from entering the liquid hydrogen carrier.

### Electrodes

The first electrode assembly 120 is configured for redox reactions with a vapor-phase hydrogen carrier such as an alcohol, for example, IPA, and a vapor phase dehydrogenated carrier, such as a ketone, for example, acetone. The second electrode assembly 140 is configured for redox reactions with each of a gaseous reductant, for example, hydrogen, and a gaseous oxidant, for example, air. The first and second electrode assemblies 120, 140 are porous in some embodiments to accommodate the flow of the liquid or gas reactants and are electrically conductive. The first and second electrode assembly 120, 140 may also contain electrocatalysts to promote the desired electrochemical reactions on each electrode.

The first electrode assembly 120 and the second electrode assembly 140 include a conductive material, i.e., a conductive metal or alloy, or carbon material. Non-limiting examples of conductive materials include platinum-group metals, transition metals, and combinations thereof.

In one or more embodiments, the second electrode assembly 140 preferably includes a metal-electrocatalyst and is configured for redox reactions with each of a gaseous reductant and a gaseous oxidant, similarly, the first electrode assembly 120 includes the electrocatalyst and is configured for redox reactions with a vapor-phase hydrogen carrier such as IPA.

In other embodiments, the electrocatalyst of the first electrode assembly 120, and the metal-electrocatalyst of the second electrode assembly 140 includes at least one metal catalyst on a support. In some other embodiments, the at least one electrocatalyst of the first electrode assembly 120, and the at least one metal-electrocatalyst the second electrode assembly 140 is selected from the group consisting of platinum-group metals, transition metals, and combinations thereof. For example, the at least one electrocatalyst of the first electrode assembly 120, and the at least one metal-electrocatalyst of the second electrode assembly 140 is Pt-black. The particle size for the at least one electrocatalyst of the first electrode assembly 120, and the at least one metal-electrocatalyst of the second electrode assembly 140 is from about 1 milligram per square centimeters (mg/cm2) to about 10 milligram per square centimeters, for example, about 1 milligram per square centimeters to about 9 milligram per square centimeters, about 1 milligram per square centimeters to about 8 milligram per square centimeters, about 1 milligram per square centimeters to about 7 milligram per square centimeters, about 1 milligram per square centimeters to about 6 milligram per square centimeters, about 1 milligram per square centimeters to about 5 milligram per square centimeters, about 1 milligram per square centimeters to about 4 milligram per square centimeters, about 1 milligram per square centimeters to about 3 milligram per square centimeters, and about 1 milligram per square centimeters to about 2 milligram per square centimeters, more preferably about 4 milligram per square centimeters.

In some other embodiments, the electrocatalyst of the first electrode assembly 120, and the metal-electrocatalyst of the second electrode assembly 140 has about 10% to about 50% by weight of the at least one metal catalyst on a support, for example, about 10% to about 45%, about 10% to about 40%, about 10% to about 35%, about 10% to about 30%, about 10% to about 25%, about 10% to about 20%, and about 10% to about 15% by weight of the at least one metal catalyst on a support.

The first diffusion layer 122 and second diffusion layer 142 (the GDLs) may be untreated diffusion materials, e.g., carbon fiber composite paper (for example, Toray-60) or nonwoven carbon papers with a microporous layer (MPL) that has been polytetrafluoroethylene (PTFE) treated (for example, SGL-24BC, SGL-25BC, or SGL-29BC). The carbon papers may be rendered hydrophilic with a wettability agent to improve removal any condensed liquids to the transport plates. In some embodiments, the GDLs are untreated Toray-60 or SGL-25BC on the first electrode assembly 120 and SGL-29BC on the second electrode assembly 140.

The membrane or a separator 130 is arranged between the first electrode assembly 120 and the second electrode assembly 140. The separator or membrane 130 is any suitable ion-exchange membrane with a high ionic conductivity and high electrical resistivity. In some embodiments, the membrane 130 prefers water over a hydrogen carrier. While not wishing to be bound by theory, it is understood that when the membrane 130 prefers water over a hydrogen carrier the crossover of fuel from one electrode to other electrode is reduced, for example, crossover from the first electrode assembly 120 to the second electrode assembly 140 is reduced. In one or more embodiments, the membrane is a polymer electrolyte membrane, for example, a perfluorosulfonic acid polymer. In some embodiments, the membrane or separator 130 has a thickness of about 10 microns to about 100 microns, for example, about 10 microns to about 90 microns, about 10 microns to about 80 microns, about 10 microns to about 70 microns, about 10 microns to about 60 microns, about 10 microns to about 50 microns, about 10 microns to about 40 microns, about 10 microns to about 30 microns, about 10 microns to about 20 microns, and about 10 microns to about 15 microns.

An electrolyte for the device 100 shown in FIG. 5 is any suitable solid-state electrolyte (SSE) such as an inorganic solid electrolyte (ISE), a solid polymer electrolyte (SPE), a composite polymer electrolyte (CPE), or a combination thereof, for example, a perfluorosulfonic acid polymer that has high ionic conductivity for protons similar to when used in proton exchange membrane fuel cells. The nonlimiting examples for the electrolyte are a polyether-based SPE, a polycarbonate, a polyester, a polynitrile (e.g., polyacrylonitrile or PAN), a polyalcohol (e.g., polyvinyl alcohol or PVA), a polyamine (e.g. polyethylenimine or PEI), a polysiloxane (e.g., polydimethylsiloxane or PDMS), a fluoropolymer (e.g., polyvinylidene fluoride or PVDF, poly(vinylidene fluoride-hexafluoropropylene) or PVDF-HFP), and a biopolymer (e.g., lignin, chitosan and cellulose). In one or more embodiments, the electrolyte is one of the constituents for the first catalyst layer 124 and the second catalyst layer 144. In some other embodiments, the electrolyte is a major component of the membrane 130 and catalyst layers 124 and 144.

In one or more embodiments, the device 100 further includes an external supply and/or storage system including a vessel fluidly connected in a recirculation loop with the first electrode assembly. In some embodiments, an operational pressure is about 80 kilopascal to about 200 kilopascal. For example, the operational pressure is in any range in-between 80, 85, 90, 95, 100, 105, 110, 115, 120, 125, 130, 135, 140, 145, 150, 155, 160, 165, 170, 175, 180, 185, 190, 195, and 200 kilopascals, for example, 85 kilopascal to about 200 kilopascal, 80 kilopascal to about 190 kilopascal, 80 kilopascal to about 180 kilopascal, 80 kilopascal to about 170 kilopascal, 85 kilopascal to about 170 kilopascal, 80 kilopascal to about 160 kilopascal, 80 kilopascal to about 150 kilopascal, 80 kilopascal to about 140 kilopascal, 80 kilopascal to about 130 kilopascal, 80 kilopascal to about 120 kilopascal, 80 kilopascal to about 110 kilopascal, 80 kilopascal to about 100 kilopascal, and 80 kilopascal to about 90 kilopascal. In some other embodiments, a power density during a discharge with air is about 0.1 watt per square centimeters to about 1 watt per square centimeters at about 0.6 volt with about 2 molar isopropanol (in liquid phase), for example, about 0.1 watt per square centimeters to about 0.9 watt per square centimeters, about 0.1 watt per square centimeters to about 0.8 watt per square centimeters, about 0.1 watt per square centimeters to about 0.7 watt per square centimeters, about 0.1 watt per square centimeters to about 0.6 watt per square centimeters, about 0.1 watt per square centimeters to about 0.5 watt per square centimeters, about 0.1 watt per square centimeters to about 0.4 watt per square centimeters, about 0.1 watt per square centimeters to about 0.3 watt per square centimeters, and about 0.1 watt per square centimeters to about 0.2 watt per square centimeters at about 0.6 volt with about 2 molar IPA in liquid phase.

In one or more embodiments, the use of the vapor-phase hydrogen carrier, for example, IPA, and vapor-phase dehydrogenated carrier, for example, acetone, avoids exposure of fuel cell membranes to liquids thereby avoiding or reducing swelling of the fuel cell membranes. In some embodiments, the use of the vapor-phase hydrogen carrier and dehydrogenated carrier via transport plates also allows the rechargeable electrochemical device 100 to run at low operating pressure compared to a vapor-phase hydrogen carrier cells as delivering carriers only via channels 152, which require high pressure gradient to run the system. The transport plates 150 and 160 wick in any condensate on carrier side and any liquid water produced on vapor or gas side, without the porous plates pressure gradients are used to remove liquid, these generally use gas compressors instead of blowers. For example the first transport plate 150 wick in liquid hydrogen carrier on a carrier side or a first side 151 of the first plate 150, and liquid water produced on a vapor or gas side or a second side 153 of the second plate 150. In some embodiments, the hydrogen carrier is in a vapor phase on the second side 153 of the transport plate 150 and in a liquid phase on a first side 151 of the transport plate 150.

In one or more embodiments, a method for using a rechargeable electrochemical device includes charging the rechargeable electrochemical device by a vapor-phase dehydrogenated carrier such as acetone into a first half-cell of the electrochemical device and feeding a gaseous reductant into a second half-cell of the electrochemical device to electrochemically reduce at least a portion of the vapor-phase dehydrogenated carrier in the electrochemical device, the first half-cell including a first electrode assembly configured for redox reactions with the vapor-phase dehydrogenated carrier and the second half-cell having a second electrode assembly configured for redox reactions with the gaseous reductant, wherein the first electrode assembly includes an electrocatalyst, and the second electrode assembly includes a metal-electrocatalyst; and discharging the electrochemical device to provide electrical power output by feeding the vapor-phase hydrogen carrier into a first half-cell of the electrochemical device and feeding a gaseous oxidant into a second half-cell of the electrochemical device to electrochemically oxidize at least a portion of the vapor-phase hydrogen carrier in the electrochemical device. In some embodiments, the vapor-phase hydrogen carrier and the vapor-phase dehydrogenated carrier is provided through a first transport plate into the first half-cell of the electrochemical device. In some embodiments, the vapor-phase hydrogen carrier and the vapor-phase dehydrogenated carrier is provided through a first transport plate into the first half-cell of the electrochemical device by wicking and evaporation of a liquid phase hydrogen carrier and a liquid phase dehydrogenated carrier. In some other embodiments, the vapor-phase dehydrogenated carrier is acetone, the vapor-phase hydrogen carrier is isopropanol, the gaseous reductant is hydrogen, and the gaseous oxidant is air.

In one or more embodiments, a method for making a rechargeable electrochemical device, the method includes arranging a membrane between a first electrode assembly and a second electrode assembly; arranging a first transport plate over the first electrode assembly, and a second transport plate over the second electrode assembly; and disposing a vapor-phase hydrogen carrier and a vapor-phase dehydrogenated carrier in the first transport plate arranged over the first electrode assembly or in the second transport plate arranged over the second electrode assembly. In some embodiments, the vapor-phase hydrogen carrier and the vapor-phase dehydrogenated carrier is disposed in the first transport plate arranged over the first electrode assembly. In some other embodiments, the vapor-phase hydrogen carrier is isopropanol.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A rechargeable electrochemical device comprising:
a first electrode assembly (120) and a second electrode assembly spaced-apart from the first electrode assembly (120);
a membrane (130) arranged between the first electrode assembly (120) and the second electrode assembly;
a first transport plate (150) arranged on the first electrode assembly (120) and a second transport plate arranged on the second electrode assembly;
an electrolyte disposed in the first electrode assembly (120) and the second electrode assembly; and
a vapor-phase hydrogen carrier in the first transport plate (150) arranged on the first electrode assembly (120) or in the second transport plate arranged on the second electrode assembly.

2. The electrochemical device of claim 1, wherein the first electrode assembly (120) comprises a first gas diffusion layer and a first catalyst layer, and the second electrode assembly comprises a second gas diffusion layer and a second catalyst layer.

3. The electrochemical device of claim 1 or 2, wherein the first electrode assembly (120) and the second electrode assembly are porous electrode assemblies, and/or wherein the device is a rechargeable-liquid fuel cell, and/or wherein the membrane (130) is an ion-exchange membrane (130), and/or wherein the electrolyte is a solid-state electrolyte.

4. The electrochemical device of any preceding claim, wherein the hydrogen carrier is in a vapor phase on a second side of the transport plate and in a liquid phase on a first side of the transport plate.

5. The electrochemical device of any preceding claim, wherein the first transport plate (150) and the second transport plates are microporous transport plates, and/ wherein the vapor-phase hydrogen carrier is isopropanol, and/or wherein the vapor-phase hydrogen carrier is provided through the first transport plate (150) arranged on the first electrode assembly (120), and/or wherein the first transport plate (150) and the second transport plate each comprises an electrically conductive hydrophilic agent.

6. The electrochemical device of any preceding claim, wherein the second electrode assembly comprises a metal-electrocatalyst and is configured for redox reactions with each of a gaseous reductant and a gaseous oxidant, and the first electrode assembly (120) comprises an electrocatalyst and is configured for redox reactions with a liquid or vapor hydrogen carrier solution, and optionally wherein the electrocatalyst of the first electrode assembly (120) and the metal-electrocatalyst of the second electrode assembly comprise at least one metal catalyst on a support, and/or wherein the electrocatalyst of the first electrode assembly (120) and the metal-electrocatalyst of the second electrode assembly is selected from the group comprising of platinum-group metals, transition metals, and combinations thereof, and/or wherein the electrocatalyst of the first electrode assembly (120) and the metal-electrocatalyst of the second electrode assembly comprises about 10% to about 50% by weight of the at least one metal catalyst on a support.

7. The electrochemical device of any preceding claim, further comprising an external supply and storage system including a vessel fluidly connected in a recirculation loop with the first electrode assembly (120), and/or wherein an operational pressure of the electrochemical device is about 80 kilopascal to about 200 kilopascal, and/or wherein a power density during a discharge with air is about 0.1 watt per square centimeters to about 1 watt per square centimeters at about 0.6 volt with about 2 molar isopropanol.

8. The electrochemical device of any preceding claim, wherein each of the first transport plate (150) and the second transport plate each comprises:
an electrically conductive graphite powder;
a thermoset binder; and
a hydrophilic agent.

9. The electrochemical device of claim 8, wherein the electrically conductive graphite powder is in an amount of between about 60% to about 90% by weight of the body, and/or wherein the thermoset binder is in an amount of between about 6% to about 18% by weight of the body, and/or wherein the hydrophilic agent is in an amount of between about 2% to about 20% by weight of the body.

10. The electrochemical device of claim 8, wherein the hydrophilic agent comprises a hydrophilically-modified electrically conductive carbon black, tin hydroxide, or a combination thereof;
wherein the modified carbon black is carbon having attached at least one organic group, the organic group comprising i.) at least one aromatic group or a C₁-C₁₂ alkyl group, and ii.) at least one ionic group, one ionizable group, or a mixture of an ionic group and an ionizable group wherein the ionic or the ionizable group is a sulfonic acid or a salt thereof, wherein the at least one aromatic group or C₁-C₁₂ alkyl of the organic group is directly attached to the carbon, and the organic group is present at a level of from about 0.10 to about 4.0 micromoles/m² of the carbon used based on the nitrogen surface area of the carbon.

11. The electrochemical device of any preceding claim, wherein each of the first and second transport plates has a mean pore size of less than 3.1 microns, and an open porosity of greater than 25% of the plate, and/or wherein each of the first and second transport plates has a bubble pressure of greater than 4 pounds per square inch, and/or wherein pores of each of the first and second transport plates are sufficiently hydrophilic to wick fill to greater than 70% of a vacuum filled level, and/or wherein each of the first and second transport plates comprises a thermoset binder that comprises a phenolic resin, a vinyl ester resin, an epoxy resin, a diallylphthalate resin, a urethane resin, or a combination thereof.

12. A method for using a rechargeable electrochemical device, the method comprising:
charging an electrochemical device by:
feeding a vapor-phase dehydrogenated carrier into a first half-cell of the electrochemical device; and
feeding a gaseous reductant into a second half-cell of the electrochemical device to electrochemically reduce at least a portion of the vapor-phase dehydrogenated carrier in the electrochemical device, the first half-cell including a first electrode assembly (120) configured for redox reactions with the vapor-phase dehydrogenated carrier, and the second half-cell having a second electrode assembly configured for redox reactions with the gaseous reductant, wherein the first electrode assembly (120) includes an electrocatalyst, and the second electrode assembly includes a metal-electrocatalyst; and
discharging the electrochemical device to provide electrical power output by:
feeding the vapor-phase hydrogen carrier into a first half-cell of the electrochemical device; and
feeding a gaseous oxidant into a second half-cell of the electrochemical device to electrochemically oxidize at least a portion of the vapor-phase hydrogen carrier in the electrochemical device.

13. The method of claim 12, wherein the vapor-phase hydrogen carrier and the vapor-phase dehydrogenated carrier is provided through a first transport plate (150) into the first half-cell of the electrochemical device, and/or wherein the vapor-phase dehydrogenated carrier is acetone, the vapor-phase hydrogen carrier is isopropanol, the gaseous reductant is hydrogen, and the gaseous oxidant is air.

14. A method for making a rechargeable electrochemical device, the method comprising:
arranging a membrane (130) between a first electrode assembly (120) and a second electrode assembly;
arranging a first transport plate (150) on the first electrode assembly (120), and a second transport plate on the second electrode assembly; and
disposing a vapor-phase hydrogen carrier and a vapor-phase dehydrogenated carrier in the first transport plate (150) arranged on the first electrode assembly (120) or in the second transport plate arranged on the second electrode assembly.

15. The method of claim 14, wherein the vapor-phase hydrogen carrier and the vapor-phase dehydrogenated carrier is disposed in the first transport plate (150) arranged on the first electrode assembly (120), and/or wherein the vapor-phase hydrogen carrier is isopropanol.
